# EUROPÄISCHE PATENTSCHRIFT

(11) **EP 0 782 733 B1**
(45) Veröffentlichungstag und Bekanntmachung des Hinweises auf die Patenterteilung: **21.04.1999**
(21) Anmeldenummer: 95931896.5
(22) Anmeldetag: 21.09.1995
(51) Int. Cl.: G06K 7/08, G06K 7/10

(54) **VORRICHTUNG ZUR BERÜHRUNGSLOSEN ENERGIE- UND DATENÜBERTRAGUNG AUF INDUKTIVEM WEGE, UND BEVORZUGTE VERWENDUNG DERSELBEN ZUR IDENTIFIKATION VON GASFLASCHEN**
DEVICE FOR CONTACTLESS, INDUCTIVE ENERGY AND DATA TRANSMISSION AND PREFERRED USE THEREOF FOR IDENTIFYING GAS BOTTLES
DISPOSITIF POUR LA TRANSMISSION D'ENERGIE ET DE DONNEES, SANS CONTACT, PAR VOIE INDUCTIVE, ET UTILISATION PREFEREE DE CE DISPOSITIF POUR L'IDENTIFICATION DE BOUTEILLES DE GAZ

(30) Priorität: 21.09.1994 DE 4433701
(43) Veröffentlichungstag der Anmeldung: 09.07.1997
(73) Patentinhaber: SIEMENS AKTIENGESELLSCHAFT, 80333 München (DE)
(72) Erfinder: RÖSCH, Jürgen, D-85399 Hallbergmoos (DE); JAKESCH, Günter, D-81375 München (DE)
(86) Internationale Anmeldenummer: DE9501299
(87) Internationale Veröffentlichungsnummer: WO9609595

(56) Entgegenhaltungen:
- EP-A- 0 389 406
- EP-A- 0 586 083
- WO-A-93/13494
- WO-A-95/15622
- GB-A- 2 077 555

## Beschreibung

Die Erfindung betrifft eine Vorrichtung zur berührungslosen Energie- und Datenübertragung auf induktivem Wege zwischen mindestens einem Schreib- und Lesegerät mit Antennenspule, und mindestens einem, bevorzugt an einem portablen Gegenstand angebrachten Datenmobilspeicher mit Antennenspule. Das Prinzip einer derartigen kontaktlosen Übertragungsstrecke entspricht einem Transformator mit abstandsabhängig variablem Kopplungsfaktor.

Bei derartigen, häufig als Identsystem bezeichneten Vorrichtungen wird ein Datenmobilspeicher zur Aktivierung, d.h. zur Ermöglichung eines Datenaustausches, durch ein Schreib- und Lesegerät zunächst berührungslos mit Energie versorgt. Dies geschieht auf induktivem Wege, indem durch eine zum Schreib- und Lesegerät gehörige Antennenspule ein magnetisches Wechselfeld im umgebenden Raum erzeugt wird. Bei Annäherung eines Gegenstandes mit einem aufgesetzten Datenmobilspeicher wird in dessen Antennenspule eine Spannung induziert. Diese stellt die für den Betrieb des Datenmobilspeichers erforderliche Energie bereit. Auch die nun mögliche Datenübertragung zwischen Schreib- und Lesegerät und Datenmobilspeicher geschieht auf induktivem Wege über die beiden Antennenspulen. Als Daten werden in der Regel den Typ und den aktuellen Zustand des mit dem jeweiligen Datenmobilspeicher versehenen Gegenstandes identifizierende Informationen zu unterschiedlichsten Zwecken an das Schreib- und Lesegerät übermittelt.

Aus der nachveröffentlichten internationalen Patentanmeldung WO 95/15622 ist eine z.B. an Gasflaschen anbringbare Vorrichtung bekannt, welche Daten beinhaltet, die berührungslos auslesbar sind. Die Vorrichtung ist auf einem ringförmigen Träger angebracht, welcher z.B. um eine Gasflasche legbar ist. Im Gegensatz zur vorliegenden Erfindung ist es bei dieser Anordnung allerdings nur möglich, Daten aus der Vorrichtung auszulesen. Aus der internationalen Patentanmeldung WO 93/13494 ist eine weitere Identifikationsvorrichtung bekannt, welche insbesondere für Gasflaschen geeignet ist. Dabei ist eine über ein Datenterminal mit einem Schreib- und Lesekopf berührungslos z.B. lesbare elektronische Datenträgeranordnung auf dem Boden eines topfförmigen Schutzringes angebracht. Der Schutzring ist z.B. am Kopf einer Gasflasche angebracht. Der Schreib- und Lesekopf des Datenterminals muß zur Ermöglichung einer Datenübertragung mit der Datenträgeranordnung in den Innenbereich des topfförmigen Schutzringes gebracht werden. Schließlich ist aus der europäischen Patentanmeldung 0 586 083 eine berührungslos lesbare, magnetische Datenträgeranordnung bekannt. Diese weist eine starre, flache, ringförmig geschlossene Struktur auf und ist am Kopfende einer Gasflasche unterhalb des Ventils der Gasflasche fest montiert.

Der maximale Abstand zwischen Datenmobilspeicher und Schreib- und Lesegerät beträgt in der Regel bis zu einem Meter, und ist in der Praxis abhängig von den Abmessungen der Antennenden jeweiligen Umgebungsbedingungen. Besondere Probleme treten bei der Anwesenheit von elektrisch leitfähigen Stoffen im Bereich des Wechselfeldes auf, da durch die darin induzierten Wirbelströme die Antennenschwingkreise von Schreib- und Lesegerät und/oder Datenmobilspeicher verstimmt werden bzw. das magnetische Wechselfeld gänzlich von der Antennenspule des Datenmobilspeichers abgeschirmt wird. Hierdurch kann die maximale Reichweite der Datenübertragung bis hin zu deren vollständiger Unterbrechung eingeschränkt werden. Besonders ungünstig ist es, wenn eine metallische Fläche eines Gegenstandes als Auflage für einen Datenmobilspeicher dienen muß.

Zur Lösung dieses Problems ist es zwar möglich, einen Datenmobilspeicher mittels spezieller Halterungen so anzubringen, daß ein ausreichender Abstand zur elektrisch leitfähigen Umgebung bzw. Unterlage eingehalten wird. Hierdurch ist gewährleistet, daß die induktive Energie- und Datenübertragung durch die ansonsten auftretenden Resonanzfrequenzverschiebungen in den Antennenschwingkreisen von Datenmobilspeicher oder Schreib- und Lesegerät möglichst wenig beeinflußt wird. Nachteilig ist aber, daß die Datenmobilspeicher über die Außenflächen der Gegenstände zum Teil stark überstehen und somit eine erhebliche Bruchgefahr besteht. Ferner wird durch derartig abstehende Halterungen der Transport und Gebrauch insbesondere von z.B. auf Grund ihrer Form schlecht handhabbaren und gegebenenfalls eine hohes Eigengewicht aufweisenden Gegenständen weiter erschweren.

Wird ein Datenmobilspeicher an einem bevorzugt portablen, zu identifizierenden Gegenstand befestigt, so ist eine Datenübertragung ohne zusätzlichen Positionierungen nur möglich, wenn die Summe aus dem einzuhaltenden Mindestabstand zwischen Datenmobilspeicher und Schreib- und Lesegerät und deren größten Kantenlängen stets kleiner als die Reichweite der Vorrichtung unter den jeweiligen Umgebungsbedingungen ist. Es ist aber nur in einfachen Fällen gewährleistet, daß sich der Datenmobilspeicher bei manueller oder automatischer Annäherung an das Schreib- und Lesegerät positionsunabhängig immer in dessen Feldbereich befindet.

Weitere Probleme treten somit bei quaderförmigen Gegenständen mit größeren Abmessungen bzw. bei Gegenständen mit gekrümmten Außenflächen auf. Hierbei ist für einen automatisierte Datenaustausch z.B. bei der Vorbeifahrt eines mit einem Datenmobilspeicher versehenen Gegenstandes auf einem Förderband an einem stationären Schreib- und Lesegerät häufig eine vorherige Positionierung erforderlich. Es muß also der Gegenstand u.U. so lange gedreht werden, bis ein im ungünstigsten Fall auf einer abgewandten Seite befindlicher Datenmobilspeicher dem Schreib- und Lesegerät zugewandt ist. Dies ist besonders schwierig bei Gegenständen, welche ein hohes Eigengewicht bzw. gekrümmte Außenfläche aufweisen und die Datenmobilspeicher somit auf schlecht definierbaren, nicht ebenen Flächen angebracht werden müssen.

Weitere Probleme treten auf, wenn mehrere, jeweils mit einem Datenmobilspeicher versehene Gegenstände z.B. auf einer Palette, in einer Box oder sonstigen Transportvorrichtung gleichzeitig an ein Schreib- und Lesegerät herangeführt werden. Zum einen können insbesondere dann, wenn die Gegenstände z.B. eine zylindrische Form haben, die Datenmobilspeicher auf manchen Gegenständen zufällig eine vom jeweiligen Schreib- und Lesegerät abgewandte Position einnehmen. Es tritt somit eine Art Abschattung auf, welche bei aus einem metallischen Werkstoff gefertigten Gegenständen besonders stark ist. Zum anderen darf sich bei konventionellen Identsystemen zur Aufrechterhaltung der ordnungsgemäßen Funktion in der Regel nur ein Datenmobilspeicher während des Datenaustausches im magnetischen Wechselfeld des Schreib- und Lesegerätes befinden. Bei Identsystemen, deren Reichweite bei entsprechendem Abstand des Datenmobilspeichers zu elektrisch leitfähiger Umgebung so groß ist, um eine Datenübertragung auch bei kleineren Abmessungen des Datenmobilspeichers positionsunabhängig zu ermöglichen, wird dieser Vorteil wieder zunichte gemacht, sobald sich mehrere Gegenstände in geringer Entfernung voneinander z.B. in einem gemeinsamen Transportbehälter befinden. Durch diese gleichzeitige Anwesenheit mehrerer Datenmobilspeicher im Feldbereich eines Schreib- und Lesegerates ist es ohne u.U. erheblichen soft- und hardwaremäßigen Zusatzaufwand nicht mehr möglich, eine Datenübertragung zu jedem einzelnen Datenmobilspeicher eindeutig unterscheidbar aufzubauen.

Der Erfindung liegt somit die Aufgabe zugrunde eine Vorrichtung anzugeben, die auch dann, wenn auf den Gegenständen nur metallische Auflageflächen zur Anbringung von Datenmobilspeichern zur Verfügung stehen und diese Gegenstände möglicherweise eng aneinanderliegend in Transportbehältern untergebracht sind, eine sichere Datenübertragung zwischen Schreib- und Lesegerät und Datenmobilspeicher zu ermöglichen, und zwar unabhängig von aktuellen Relativposition von Schreib- und Lesegerät zu einem Datenmobilspeicher auf einer Außenseite des jeweiligen Gegenstandes.

Die Aufgabe wird gelöst mit der im Anspruch 1 angegebenen Vorrichtung. Vorteilhafte weitere Ausführungsformen der Vorrichtung und eine vorteilhafte Verwendung derselben zur Identifikation von Gasflaschen sind in den nachfolgenden Unteransprüchen angegeben.

Die Erfindung und vorteilhafte Ausführungsformen derselben werden anhand der nachfolgend kurz dargestellten Figuren näher erläutert. Dabei zeigt
- Fig. 1: eine bevorzugte Ausführungsform eines Datenmobilspeichers der erfindungsgemäßen Vorrichtung in Seitenansicht,
- Fig.2: eine bevorzugte Ausführungsform eines Schreib- und Lesegerätes der erfindungsgemäßen Vorrichtung in Seitenansicht, und
- Fig.3: eine beispielhafte Anbringung von Datenmobilspeichern der erfindungsgemäßen Vorrichtung im Bereich der Halsringe von Gasflaschen gemäß einer bevorzugten Verwendung der erfindungsgemäßen Vorrichtung.

Die Vorrichtung zur berührungslosen Energie- und Datenübertragung auf induktivem Wege gemäß der Erfindung enthält mindestens ein Schreib- und Lesegerät mit einer Antennenspule, und mindestens einen Datenmobilspeicher, welcher eine Speicher- und Betriebsschaltung und eine daran angeschlossene langgestreckte Schlaufenspule aufweist, die auf einem bandförmigen, bevorzugt elastischen Träger aufgebracht sind. Vorteilhaft kann eine flexible Leiterplatte als bandförmiger Träger für die langgestreckte Schlaufenspule eingesetzt werden. Die Anordnung hat den Vorteil, daß der Datenmobilspeicher auf Oberflächen mit nahezu beliebiger Welligkeit aufgebracht werden kann.

Die erfindungsgemäße Vorrichtung kann bevorzugt zur Identifikation von Gasflaschen eingesetzt werden, wobei um den Mantel einer jeden Gasflasche insbesondere im Bereich von deren Halsringen der bandförmige, elastische Träger eines Datenmobilspeichers gelegt ist. Hierdurch ist es in jedem Fall und unabhängig von der aktuellen radialen Position eines Schreib- und Lesegerätes gegenüber der Achse einer Gasflasche möglich, eine sichere Datenübertragung zu gewährleisten, auch wenn mehrere Gasflaschen in einer als Transportbehälter dienenden Gitterbox eng beieinander stehen sollten. Da Gasflaschen aus einem metallischen Werkstoff bestehen, ist es in diesem Fall vorteilhaft, wenn der bandförmige Träger für die langgestreckte Schlaufenspule eine gewisse Stärke aufweist, und die Schlaufenspule auf der dem Halsring einer Gasflasche abgewandten Seite des Trägers aufgebracht bzw. dort eingelassen ist. Eine flexible Leiterplatte als bandförmiger Träger weist bereits in aller Regel eine hierfür ausreichende Stärke auf.

Die erfindungsgemäße Vorrichtung ist somit bevorzugt geeignet zur Anbringung und Identifikation von Gegenständen, welche eine gekrümmte, insbesondere zylindrische Oberfläche aufweisen. Sind diese Gegenstände z.B. aus einem elektrisch nicht leitenden Material gefertigt, so braucht der bandförmige Träger keine nennenswerte Stärke aufzuweisen. In einem solchen Fall kann z.B. ein Klebeband bzw. eine Klebefolie als Träger dienen, auf deren mit Kleber versehenen Seite die langgestreckte Schlaufenspule und die Speicher- und Betriebsschaltung aufgelegt sind. Diese klebebandartigen Träger können zu Transportzwecken z.B. auf kartonartigen, zumindest einseitig beschichteten Unterlagen aufgelegt sein und von diesen zum Zwecke der endgültigen Anbringung an einem zu identifizierenden Gegenstand komplett mit einer Einheit aus einer langgestreckten Schlaufenspule und Speicher- und Betriebsschaltung beschädigungsfrei abgezogen werden. Auf Grund der selbstklebenden Eigenschaften entfallen dabei Hilfsmittel zur Halterung des Trägers, wie z.B. Schlösser. Es ist auch möglich, eine Vielzahl von aus je einer langgestreckten Schlaufenspule und einer dazugehörigen Speicher- und Betriebsschaltung bestehenden Einheiten reihenartig hintereinander auf der Klebeseite eines Endlosklebebandes anzubringen, und dieses in Form von Kleberollen zu konfektionieren. Mit derartigen Rollen ist es dann möglich, schnell und ohne nennenswerten Aufwand eine u.U. sehr große Anzahl von Gegenständen, z.B. einen in die Tausende gehenden Bestand an Gasflaschen, welche einer berührungslosen Identifizierung zugänglich gemacht werden sollen, mit einem gemäß der Erfindung gestalteten Datenmobilspeicher auszurüsten.

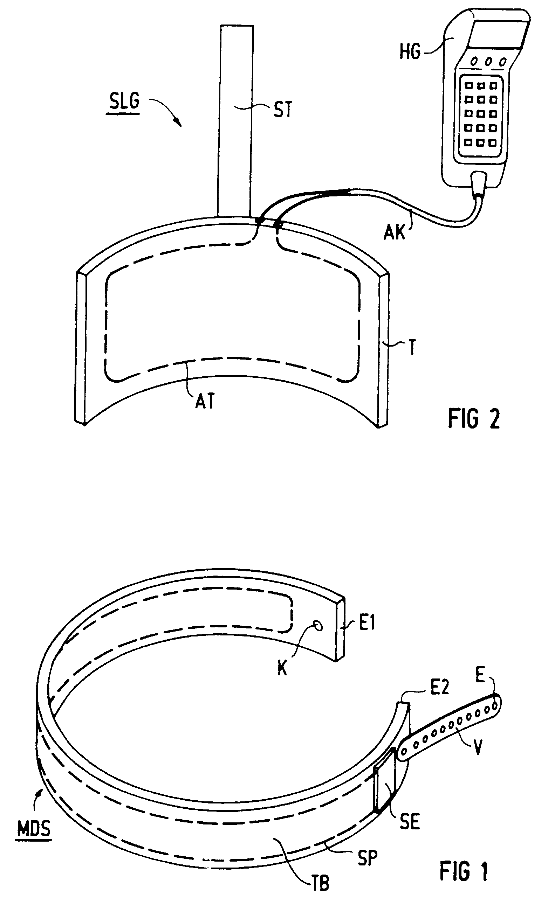

Die Erfindung und weitere vorteilhafte Ausführungsformen derselben werden an Hand eines in den Figuren 1 und 2 dargestellten, bevorzugten Ausführungsbeispieles näher erläutert.

Gemäß der Darstellung in Figur 1 weist der Datenmobilspeicher MDS erfindungsgemäß einen bandförmigen, elastischen Träger TB auf. Auf diesen ist die Antennenspule SP des Datenmobilspeichers MDS aufgebracht. Diese weist die Form einer ebenen, langgestreckten Schlaufenspule auf. Die Spule kann mehrere Windungen haben, was in Figur 1 aus Gründen der Übersichtlichkeit nicht dargestellt ist. An der einen kurzen Endseite E1 des bandförmigen Trägers TB ist die Spule geschlossen, während sie an der anderen kurzen Endseite E2 an eine Speicher- und Betriebsschaltung SE angeschlossen ist. Die Schaltung dient insbesondere zum Speichern von sogenannten Identdaten eines mit dem Datenmobilspeicher versehenen Gegenstandes, zur Energieversorgung des Datenmobilspeichers und zur Ermöglichung einer Datenübertragung über die Schlaufenspule SP mit einem Schreib- und Lesegerät auf induktivem Wege. Vorteilhaft kann der bandförmige, elastische Träger TB z.B. in Form einer flexiblen Leiterplatte ausgeführt sein, auf der die langgestreckte Schlaufenspule SP und die Speicher- und Betriebsschaltung SE z.B. als sogenannter ASIC unmittelbar aufbringbar sind.

Die in Figur 1 beispielhaft dargestellte, erfindungsgemäße Ausführung eines Datenmobilspeichers MDA hat eine Vielzahl von Vorteilen. Zum einen ist die Induktivität der Schlaufenspule SP unabhängig von der Krümmung des bandförmigen, elastischen Trägers TB in einer senkrecht zur Spulenfäche liegenden Ebene, solange keine Überlappung von Schlaufenanfang und -ende an den kurzen Endseiten E1,E2 des Trägers TB auftritt. Der Träger TB und damit der gesamte, aus Schlaufenspule SP und Speicher- und Betriebsschaltung SE bestehende Datenmobilspeicher MDS kann zur Montage auf eine bezüglich der kurzen Schlaufenkante ebene Oberfläche aufgelegt werden. In Richtung der langen Schlaufenkante kann diese Oberfläche eine nahezu beliebige Krümmung bzw. Kontur aufweisen. So kann der Träger z.B. um eine 90 Grad Kante eines quaderförmigen Gegenstandes gelegt werden, z.B. auf die Kante des Gehäuses eines Kühlschrankes. Es ist dann problemlos möglich, eine Datenübertragung in zwei senkrechte Raumrichtungen zu bewirken.

Der erfindungsgemäße Datenmobilspeicher MDS ist ferner besonders geeignet, um auf kreisförmig gekrümmte Oberflächen gelegt zu werden, z.B. auf die Außenseiten von zylindrischen Gegenständen. Es ist ohne weiteres möglich, den bandförmigen Träger TB des Datenmobilspeichers MDS in Form eines flachen geschlitzten, leicht aufbiegbaren oder federnden Ringes, Kragens bzw. einer Spange, oder sogar als formloses Band auszubilden. In jedem Fall ist eine einfache Montage gewährleistet. Bei einer Anwendung zur Identifikation von zylindrischen Gegenständen, wie z.B. Flaschen, ist die Anbringung unabhängig vom aktuellen Krümmungsradius und dem Umfang des Gegenstandes möglich. Die von der Schlaufenspule aufgespannte Fläche ist dabei parallel zur Oberfläche des Gegenstandes. Wird der zylindrische Gegenstand nahezu vollständig umschlossen, so ist eine Datenübertragung radial in alle Raumrichtungen um die Achse des zylindrischen Gegenstandes möglich.

Vorteilhaft sind die kurzen Endseiten E1 und E2 des bandförmigen, elastischen Trägers TB mit einer lösbaren Verschlußvorrichtung verbindbar. Im Beispiel der Figur 1 ist hierzu an einer kurzen Endseite E2 des Trägerbandes TB eine laschenförmige Verschlußvorrichtung V mit einer Reihe von Haltelöchern E vorhanden, die abhängig vom aktuellen Umfang eines z.B. zylindrischen Gegenstandes in einen Halteknopf K an der anderen kurzen Endseite E2 des Trägers TB eingreifen. Gegebenenfalls kann die Verschlußvorrichtung plombierbar ausgeführt sein. Andererseits kann der Träger auch aufgeklebt werden.

Der Abstand zwischen der Ebene der Schlaufenspulen SP und der Oberfläche des Gegenstandes braucht auch bei elektrischer Leitfähigkeit derselben nur wenige Millimeter betragen, so daß bandförmige, elastische Träger mit nur geringer Dicke eingesetzt werden können. Der Durchmesser des Gegenstandes wird durch den aufgelegten Datenmobilspeicher kaum merklich vergrößert. Im Fall einer Montage auf einer elektrisch leitfähigen Fläche kann bei Bedarf zusätzlich eine Kompensation der davon verursachten Verstimmung des Schwingkreises der Schlaufenspule im Datenmobilspeicher durch eine entsprechende Wahl von deren effektiver Schwingkreiskapazität erfolgen.

Schreib- und Lesegeräte können fest montiert und mit einem externen Rechner verbunden werden. Bei mobilem Einsatz können diese auch in Form von tragbaren Handgeräten ausgeführt sein. In Figur 2 ist ein Beispiel für eine portable Ausführung eines Schreib- und Lesegerätes SLG dargestellt. Dieses enthält eine separates Handgerät und dient zu einer Art von "Fernbedienung" von Datenmobilspeichern. Es weist bevorzugt eine Bedientastatur und eine Anzeigevorrichtung insbesondere in Form eines LCD-Displays auf, worüber sogenannte "Identdaten" von einem Datenmobilspeicher abgerufen bzw. auch aktualisiert und rückgeschrieben werden können. Das Handgerät HG des Schreib- und Lesegerätes SLG ist über ein Anschlußkabel AK mit einer Antennenspule AT verbunden, welche bevorzugt auf einem separaten, elastischen Träger T aufgebracht ist. Hierzu eignet sich wiederum bevorzugt eine flexible Leiterplatte, welche vorteilhaft einen annähernd c-fömigen Querschnitt aufweisen kann. Über einen Haltestab ST kann der Träger T mit der Antennenspule AT des Schreib- und Lesegerätes SLG auf einfache Weise auch dann in die räumliche Nähe eines bestimmten erfindungsgemäßen Datenmobilspeichers gebracht werden, wenn dieser an einem Gegenstand angebracht ist, der sich z.B. in einem Transportbehälter in einer dichten Packung mit weiteren Gegenständen identischer Form befindet.

Die erfindungsgemäße Vorrichtung ist besonders geeignet, um zur Identifikation von Gasflaschen eingesetzt zu werden.

Gasflaschen bestehen aus elektrisch leitfähigen Materialien und haben eine zylindrische Form mit ringförmig gekrümmten Außenflächen unterschiedlichen Umfangs. Diese werden im industriellen Bereich in sehr großen Stückzahlen eingesetzten und mit verschiedenartigsten technischen Gasen angefüllt, welche z.B. in der chemischen Industrie zu unterschiedlichsten Zwecken benötigt werden. Es besteht dabei sowohl für einen Hersteller von technischen Gasen, welcher häufig einen mehrere Millionen Stück umfassenden Bestand an Gasflaschen verwalten muß, als auch für den jeweiligen Abnehmer von technischen Gasen ein erhebliches sicherheitstechnisches und wirtschaftliches Interesse an einer exakten Identifikation einer jeden Gasflasche und der Bearbeitung von deren aktuellen spezifischen Kennwerten. Als technische Kennwerte sind insbesondere die jeweilige Flaschennummer, Größe, aktueller Inhalt, der Termin für die nächste Flaschenüberprüfung u.dgl. von Wichtigkeit. Ferner ist es wichtig, den genauen Transportweg und Verbleib einer jeden Flasche über längere Zeiträume in der Vergangenheit zu erfassen.

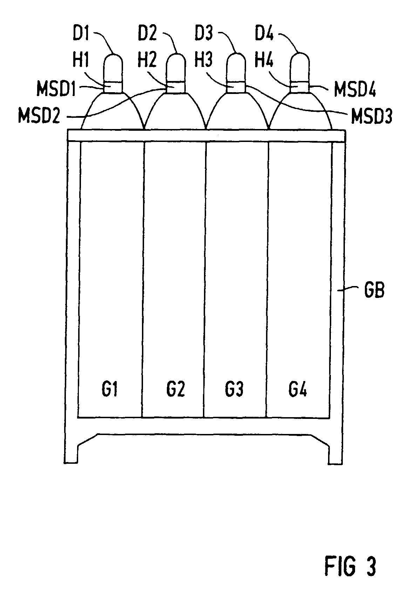

Im Beispiel der Figur 3 sind vier Gasflaschen G1...G4 dargestellt, welche zum Transport in einer Gitterbox GB eng nebeneinander stehend zusammengefaßt sind. Erfindungsgemäß ist um den Mantel einer jeden Gasflasche G1...G4 bevorzugt im Bereich von deren Halsringen H1...H4, welcher zur Halterung der Flaschenventile und zum Aufschrauben einer die Flaschenventile schützenden Deckelkappe D1...D4 dienen, jeweils ein bandförmiger, elastischer Träger eines Datenmobilspeichers MDS1...MDS4 gelegt.

Eine derartige Anordnung hat den besonderen Vorteil, daß eine berührungslose Energie- und Datenübertragung von einer Schreib- und Lesevorrichtung zu einem am Halsbereich einer Gasflasche angebrachten Datenmobilspeichers möglich ist, auch wenn sich diese im Inneren einer mit weiteren Gasflaschen vollständig gefüllten Gitterbox befindet und möglicherweise mehrere Gitterboxen übereinander gestapelt sind. Die Datenübertragung kann aufgrund der vorteilhaften Gestaltung der Datenmobilspeicher aus beliebigen Raumrichtungen erfolgen. Es ist somit nicht erforderlich, die Gasflaschen eventuell bezüglich ihrer Zylinderachse zu drehen, bzw. sogar vorübergehend aus der Gitterbox zu entnehmen. Ferner wird die Handhabung einzelner Gasflaschen durch einen kragenförmig um den Halsring gelegten Datenmobilspeicher in keiner Weise behindert. Schließlich besteht bei der Anbringung der Datenmobilspeicher im Halsbereich nur eine sehr geringe Gefahr einer mechanischen Beschädigung.

Vorteilhaft kann hierbei eine gemäß der Darstellung von Figur 2 ausgeführte Schreib- und Lesevorrichtung SLG mit einer separaten Antennenspule eingesetzt werden, die auf einem c-förmigen und an einem Haltestab befestigten Träger aufgebrachten.

## Patentansprüche

1. Vorrichtung zur berührungslosen, raumrichtungsunabhängigen Energie- und Datenübertragung auf induktive Wege, mit
a) mindestens einem Schreib- und Lesegerät (SLG) mit einer Antennenspule (AT), und mit
b) mindestens einem Datenmobilspeicher (MDS), welcher eine Speicher- und Betriebsschaltung (SE) und eine daran angeschlossene langgestreckte Schlaufenspule (SP) aufweist, die auf einem bandförmigen, elastischen Träger (TB) aufgebracht sind, und wobei Träger (TB) und Schlaufenspule (SP) so gestaltet sind, daß diese auf die Mantelaußenseite eines mit dem Datenmobilspeicher (MDS) versehenen Objektes auflegbar sind und dieses insbesondere ringförmig nahezu vollständig umschließen (Fig.1).

2. Vorrichtung nach Anspruch 1, mit einer flexiblen Leiterplatte als bandförmigen, elastischen Träger (TB) für eine Einheit aus langgestreckter Schlaufenspule (SP) und Speicher- und Betriebsschaltung (SE).

3. Vorrichtung nach Anspruch 1 oder 2, wobei die kurzen Endseiten (E1,E2) des bandförmigen, elastischen Trägers (TB) mit einer lösbaren Verschlußvorrichtung (V,E,K) verbindbar sind (Fig.1).

4. Vorrichtung nach Anspruch 1, mit einem Klebeband bzw. einer Klebefolie als bandförmigen, elastischen Träger (TB) für eine Einheit aus langgestreckter Schlaufenspule (SP) und Speicher- und Betriebsschaltung (SE).

5. Vorrichtung nach einem der vorangegangenen Ansprüche, wobei die Antennenspule (AT) des Schreib- und Lesegerätes (SLG) auf einem separaten, elastischen Träger (T) aufgebracht ist.

6. Vorrichtung nach Anspruch 5, mit einer flexiblen Leiterplatte als separaten, elastischen Träger (T) für die Antennenspule (AT).

7. Vorrichtung nach Anspruch 5 oder 6, wobei der separate, elastische Träger (T) für die Antennenspule (AT) einen annähernd c-förmigen Querschnitt aufweist (Fig.2).

8. Vorrichtung nach Anspruch 5,6 oder 7, wobei an dem separaten, elastischen Träger (T) für die Antennenspule (AT) ein Haltestab (ST) angebracht ist (Fig.2).

9. Verwendung einer Vorrichtung nach einem der vorangegangenen Ansprüche zur Identifikation von Gasflaschen (G1...G4), wobei um den Mantel einer jeden Gasflasche (G1...G4) insbesondere im Bereich von deren Halsringen (H1...H4) der bandförmige, elastische Träger (TB) eines Datenmobilspeichers (MDS1...MDS4) gelegt ist (Fig.3).

## Claims

1. Device for contactless, inductive power and data transmission independently of spatial direction, having
a) at least one writing and reading unit (SLG) with an antenna coil (AT), and having
b) at least one mobile data memory (MDS) which has a memory and operating circuit (SE) and, connected thereto, an elongate loop coil (SP), which are provided on an elastic carrier (TB) in the form of a strip, in which case the carrier (TB) and the loop coil (SP) are configured in such a way that they can be placed onto the casing exterior of an object provided with the mobile data memory (MDS) and enclose said object virtually completely, in particular in the shape of a ring (Figure 1).

2. Device according to Claim 1, having a flexible printed circuit board as the elastic carrier (TB) in the form of a strip for a unit comprising the elongate loop coil (SP) and the memory and operating circuit (SE).

3. Device according to Claim 1 or 2, it being possible to connect the short end sides (El, E2) of the elastic carrier (TB) in the form of a strip to a releasable closure device (V, E, K) (Figure 1).

4. Device according to Claim 1, having an adhesive tape or an adhesive film as the elastic carrier (TB) in the form of a strip for a unit comprising the elongate loop coil (SP) and the memory and operating circuit (SE).

5. Device according to one of the preceding claims, the antenna coil (AT) of the writing and reading unit (SLG) being provided on a separate, elastic carrier (T).

6. Device according to Claim 5, having a flexible printed circuit board as the separate, elastic carrier (T) for the antenna coil (AT).

7. Device according to Claim 5 or 6, the separate, elastic carrier (T) for the antenna coil (AT) having an approximately c-shaped cross section (Figure 2).

8. Device according to Claim 5, 6 or 7, a retaining rod (ST) being fitted to the separate, elastic carrier (T) for the antenna coil (AT) (Figure 2).

9. Use of a device according to one of the preceding claims for identifying gas cylinders (G1...G4), the elastic carrier (TB), in the form of a strip, of a mobile data memory (MDS1...MDS4) being placed around the casing of each gas cylinder (G1...G4), particularly in the region of the neck rings (H1...H4) thereof (Figure 3).

## Revendications

1. Dispositif pour la transmission d'énergie et de données, sans contact, par voie inductive et indépendamment de la direction de l'espace, comportant
a) au moins un appareil d'écriture et de lecture (SLG) ayant une bobine-antenne (AT), et
b) au moins une mémoire mobile de données (MDS) qui comporte un circuit de mémorisation et de fonctionnement (SE) et une bobine en forme de boucle (SP) allongée raccordée audit circuit, qui sont montées sur un support (TB) élastique en forme de bande, le support (TB) et la bobine en boucle (SP) ayant une configuration telle qu'ils peuvent être placés sur le côté extérieur du corps d'un objet équipé de la mémoire mobile de données (MDS) et entourent celui-ci pratiquement complètement, notamment en forme d'anneau (figure 1).

2. Dispositif selon la revendication 1, comportant une carte à circuit imprimé flexible comme support (TB) élastique en forme de bande pour une unité formée d'une bobine en boucle (SP) allongée et d'un circuit de mémorisation et de fonctionnement (SE).

3. Dispositif selon la revendication 1 ou 2, les côtés terminaux courts (E1, E2) du support (TB) élastique en forme de bande pouvant être reliés à un dispositif de fermeture (V, E, K) amovible (figure 1).

4. Dispositif selon la revendication 1, comportant un ruban adhésif ou une feuille adhésive comme support (TB) élastique en forme de bande pour une unité formée d'une bobine en boucle (SP) allongée et d'un circuit de mémorisation et de fonctionnement (SE).

5. Dispositif selon l'une des revendications précédentes, la bobine-antenne (AT) de l'appareil d'écriture et de lecture (SLG) étant montée sur un support (T) élastique distinct.

6. Dispositif selon la revendication 5, comportant une carte à circuit imprimé flexible comme support (T) élastique distinct de la bobine-antenne (AT).

7. Dispositif selon la revendication 5 ou 6, le support (T) élastique distinct de la bobine-antenne (AT) présentant une section approximativement en forme de C (figure 2).

8. Dispositif selon la revendication 5, 6 ou 7, une tige de maintien (ST) étant montée sur le support (T) élastique distinct de la bobine-antenne (AT) (figure 2).

9. Utilisation d'un dispositif selon l'une des revendications précédentes pour l'identification de bouteilles de gaz (G1...G4), le support (TB) élastique en forme de bande d'une mémoire mobile de données (MDS1...MDS4) étant placé autour du corps de chacune des bouteilles de gaz (G1...G4), en particulier dans la zone de sa bague de col (H1...H4) (figure 3).
